Europäisches Patentamt

European Patent Office

Office européen des brevets

(19)

(11) Numéro de publication: **0 037 305**
**B1**

(12) **FASCICULE DE BREVET EUROPEEN**

(45) Date de publication du fascicule du brevet: **18.07.84**

(51) Int. Cl.³: **F 16 D 55/224**

(21) Numéro de dépôt: **81400399.2**

(22) Date de dépôt: **16.03.81**

(54) Frein à disque à étrier coulissant.

(30) Priorité: **31.03.80 FR 8007164**

(43) Date de publication de la demande:
**07.10.81 Bulletin 81/40**

(45) Mention de la délivrance du brevet:
**18.07.84 Bulletin 84/29**

(84) Etats contractants désignés:
**DE GB IT SE**

(56) Documents cités:
**DE - A - 2 514 385**
**DE - A - 2 742 295**
**DE - A - 2 809 383**
**FR - E - 96 222**

(73) Titulaire: **SOCIETE ANONYME D.B.A.**
**Centre Paris Pleyel**
**F-93521 St-Denis Cédex 01 (FR)**

(72) Inventeur: **Courbot, Pierre**
**1 bis, rue d'Hérivaux**
**F-95400 Villiers Le Bel (FR)**

(74) Mandataire: **Poidatz, Emmanuel et al,**
**Service Brevets Bendix 44 rue François 1er**
**F-75008 Paris (FR)**

Courier Press, Leamington Spa, England.

## Description

L'invention a pour objet un frein à disque à étrier coulissant, notamment pour véhicule automobile.

L'invention concerne en particulier un frein à disque dont l'étrier est monté coulissant sur un support fixe comportant deux éléments de friction reçue en ancrage soit dans le support fixe, soit dans l'étrier et suscpetibles de venir en engagement de friction avec les faces opposées d'un disque tournant lors de la mise en oeuvre d'un moteur de frein agissant directement sur l'un des éléments de friction et agissant sur l'autre élément de friction par réaction au travers de l'étrier coulissant et comportant un ressort prenant appui sur l'étrier et pressant les éléments de friction contre une surface d'appui pratiquée dans l'élément recevant en ancrage lesdits éléments de friction.

On connaît FR—A—2.138.457 un frein à disque du type ci-dessus dans lequel l'étrier est monté coulissant sur un support fixe au moyen de clavettes et de ressorts, les éléments de friction étant reçus en ancrage et coulissement dans le support fixe et sollicités sur ce support fixe à l'aide d'un ressort des patins prenant appui sur l'étrier. Dans ce type de freins des interventions telles que le changement d'un piston, d'un joint de piston et en particulier le changement des éléments de friction peuvent conduire à déposer l'étrier de son support fixe.

Lorsque l'étrier est déposé, le ressort n'est plus tenu, il peut se désolidariser de l'étrier et risque d'être endommagé ou déformé lors du remontage ce qui pourrait entraîner un fonctionnement incorrect. Dans ce cas il pourrait être nécessaire de remplacer l'ancien ressort par un neuf et de veiller à son montage correct.

Le demande de brevet allemand DE—A—28 09 383 enseigne de solidariser le ressort pour éviter son démontage. Néammoins il existe un risque notable de détériorer le ressort car celui-ci doit être déformé pour accéder aux éléments de friction et si la limite élastique du ressort est dépassée l'effort de verrouillage du ressort après sa remise en place peut être insuffisant, la sécurité de montage du ressort et des éléments de friction n'étant plus alors assurée.

Fréquemment le ressort des patins est réalisé en lame métallique élastique qui vient obturer tout ou partie d'une ouverture pratiquée dans l'étrier. Cette disposition réduit le passage de l'air à travers l'ouverture de l'étrier limitant ainsi les possibilités d'aération et de réduction de température du frein.

L'invention a pour objet un frein à disque du type décrit plus haut dans lequel de tels inconvénients sont évités.

Dans ce but, l'invention propose un frein à disque à étrier coulissant sur un support fixe comportant deux éléments de friction reçus en ancrage dans ledit support ou ledit étrier et un ressort monté dans un dégagement dudit étrier et sollicitant lesdits éléments de friction en appui sur l'élément les recevant en ancrage, caractérisé en ce que ledit ressort comporte deux branches extrêmes sensiblement parallèles à l'axe dudit frein coopérant avec ledit dégagement pour assurer le maintien dudit ressort et une branche centrale reliée auxdites branches extrêmes au moyen de liaisons élastiques, pour solliciter élastiquement lesdits éléments de friction dans une direction sensiblement radiale.

Il apparaît ainsi que, grâce à l'invention, la désolidarisation du ressort et de l'étrier est évitée, le risque d'endommager le ressort est réduit et sont remontage incorrect est évité.

On décrira maintenant à titre d'exemple non limitatif un mode de réalisation de l'invention en se référant aux Figures annexées dans lesquelles:

— la Figure 1 est une vue de dessus d'un frein à disque réalisé conformément à l'invention, montrant les phases d'assemblage du frein; certaines portions du frein sont représentées en coupes partielles suivant la ligne A—A de la Figure 3;

— la Figure 2 est une vue de côté en coupe du frein de la Figure 1 suivant la ligne B—B de la Figure 1;

— la Figure 3 est une vue de face du frein de la Figure 1, montrant les phases d'assemblage du frein; certaines portions du frein sont représentées en coupes partilles suivant la ligne C—C de la Figure 1;

— la Figure 4 est une vue en coupe des moyens de coulissement du frein de la Figure 1 prise suivant la ligne D—D de la Figure 1;

— la Figure 5 représente en vue de face un ressort des patins réalisé conformément à l'invention avant le montage de celui-ci dans l'étrier, et

— la Figure 6 représente en vue de dessus le ressort de la Figure 5 avant le montage de celiu-ci dans l'étrier.

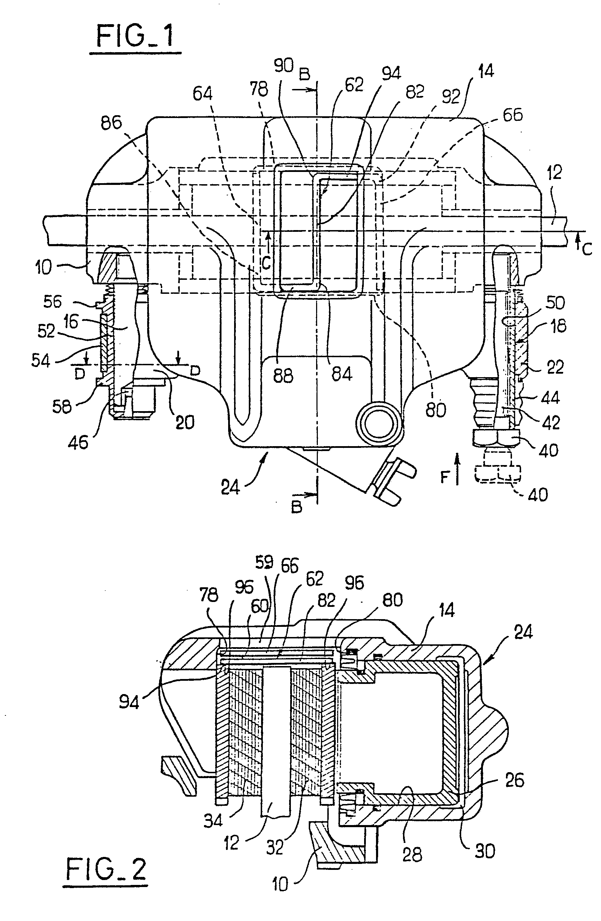

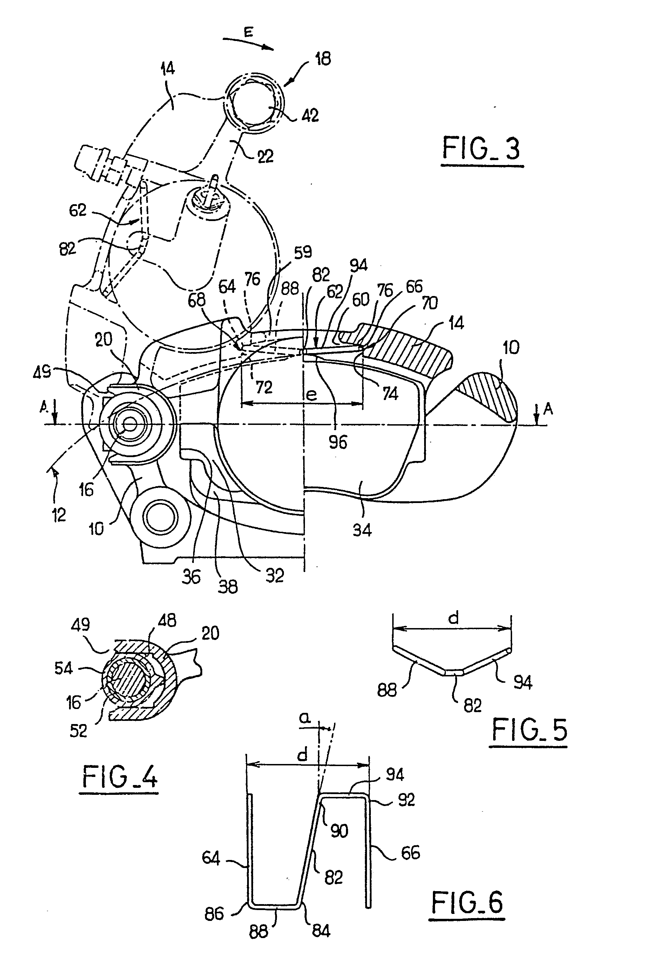

Le frein à disque représenté sur les Figures 1 à 3 comporte un support fixe 10 prévu pour être associé à une partie fixe du véhicule (non représentée) et constitué dans le mode de réalisation représenté par une plaque disposée au voisinage d'un disque 12 prévu pour être associé en rotation à une roue du véhicule (non représentée). Le support fixe 10 reçoit en coulissement un étrier mobile 14 chevauchant le disque. L'étrier coulisse sur le support fixe au moyen de colonnettes axiales 16 et 18 circonférentiellement espacées dont les axes sont sensiblement parallèles à l'axe du disque 12. Les colonnettes 16 et 18 sont disposées entre le support fixe et les bras 20 et 22 de l'étrier 14. L'étrier 14 comporte des moyens d'actionnement 24 constitués par un moteur de frein hydraulique comprenant un piston 26, monté coulissant dans un alésage 28 défini dans l'étrier 14, sensible à la pression régnant dans une chambre de commande 30 susceptible d'être reliée à une source de pression telle que, par exemple, le maître cylindre d'un véhicule (non représenté). Le piston 26 est disposé de façon à solliciter directement un premier élément de friction 32 contre une première face du disque 12 lorsque le fluide sous pression est admis dans la chambre 30. L'étrier 14 se déplace alors par réaction et coulisse sur les colonnettes 16 et 18 pour venir solliciter un second élément de friction 34 contre l'autre face du disque 12. Comme le montre en particulier la Figure 3, l'élément de friction 32 est supporté en coulissement et en ancrage par des bords circonférentiellement espacés 36 d'une ouverture 38 ménagée dans le support fixe 10. D'une manière identique l'élément de friction 34 est également reçu en coulissement et en ancrage sur le support fixe 10.

Comme le montre plus particulièrement la Figure 1, les deux colonnettes 16 et 18 sont associées au support fixe 10 par une liaison filetée. Plus précisément, les colonnettes 16 et 18 qui permettent le mouvement de coulissement de l'étrier 14 sont montées vissées sur ledit support fixe. La colonnette 16 est munie sur une première extrémité d'une zone filetée destinée à être vissée dans le support fixe 10, la deuxième extrémité libre est munie d'une tête de vis à six pans creux 46 permettant de visser ladite colonnette dans ledit support à l'aide d'une clé correspondante (non représentée). Une tête hexagonale 40 d'un boulon 42 permet de visser sur le support fixe 10 l'ensemble bague 44 et boulon 42 à l'aide d'une clé correspondante (non représentée).

Les bras 20 et 22 de l'étrier 14 sont munis d'alésages 48 et 50 dans lesquels sont enfilées les colonnettes 16 et 18 respectivement.

En se rapportant aux Figures 1 et 4 on voit que l'alésage 48 du bras 20 présente dans une section transversale une échancrure 49 de la forme d'un "C" ouvert dans une direction sensiblement opposée à l'axe du moteur de frein hydraulique constituant les moyens d'actionnement 24. La colonnette 16 est munie d'une bague de coulissement 52 équipée dans le mode de réalisation décrit d'un manchon caoutchouc 54 faisant office de bague antibruit. Les collerettes 56 et 58 de la bague 52 immobilisent celle-ci en translation axiale par rapport au bras 20.

L'étrier 14 coulisse sur la colonnette 16 au moyen de la bague 52 et directement sur la bague 44 de la colonnette 18.

Dans le mode de réalisation représenté sur les Figures 1 à 3 et conformément à l'invention, l'étrier 14 comporte une ouverture 59 et un dégagement 60 dans lequel est monté un ressort des patins 62.

Le ressort des patins 62, réalisé en une seule pièce en fil métallique à ressort, comporte deux branches extrêmes 64 et 66 sensiblement parallèles à l'axe du frein et prenant appui sur deux surfaces d'appui 68 et 70 constituées par les parois d'extrémité circonférentielles 72 et 74 du dégagement 60 et par le fond 76 du dégagement 60. Les deux branches extrêmes 64 et 66 sont immobilisées axialement au moyen des parois d'extrémité 78 et 80 axialement espacées du dégagement 60. Le ressort 62 comporte également, comme le montrent aussi les Figure 5 et 6, une branche centrale 82 reliée, à son extrémité 84, à l'extrémité 86 de la branche extrême 64 au moyen du brin latéral élastique 88 et reliée, à son extrémité 90, à l'extrémité 92 de la branche extrême 66 au moyen du brin latéral élastique 94. La branche centrale 82 sollicite sensiblement radialement les éléments de friction 32 et 34 en prenant appui sur les saillies 96 portées par les éléments de friction. L'effort de réaction des saillies 96 sur la branche central 82 est transmis par les brins latéraux élastiques 88 et 94 aux branches extrêmes 64 et 66 ce qui augmente la sollicitation de celles-ci sur les faces d'appui 68 et 70.

Comme le montrent les Figures 5 et 6 représentant le ressort 62 dans son état libre avant montage la distance "d" entre les branches extrêmes 64 et 66 est supérieure à l'écartement "e" des parois d'extrémité circonférentielles 72 et 74 du dégagement 60. Par conséquent, même sans l'effort de réaction des saillies 96 sur la branche centrale 82, les brins élastiques 88 et 94 maintiennent en appui les branches extrêmes 64 et 66 sur les surfaces d'appui 68 et 70.

On comprend que le dégagement 60 peut présenter des gorges réalisées dans les surfaces d'appui 68 et 70 pour recevoir les branches extrêmes 64 et 66 du ressort 62, pour maintenir celui-ci dans l'étrier. Dans ce cas il ne sera pas nécessaire que la distance entre les fonds des gorges soit inférieure à la distance à l'état libre entre les brins extrêmes 64 et 66 du ressort 62. On comprend également que le ressort 62 peut être réalisé autrement que en fil et que les saillies 96 des éléments de friction 32 et 34 peuvent venir de matière avec lesdits éléments de friction ou être rapportées sur ceux-ci.

L'opération de montage de l'étrier 14 sur le support fixe 10 s'effectue de la manière suivante:

La colonnette 16 est déjà vissée sur le support fixe 10, on vient enfiler la bague 52 préalablement munie, dans le mode de réalisation décrit, de son manchon 54 sur la colonnette 16. L'étrier 16 est préalablement équipé du ressort 62 monté dans le dégagement 60 en rapprochant par élasticité les deux branches extrêmes 64 et 66 qui seront relâchées après mise en place dans ledit dégagement. En se repportant aux Figures 5 et 6 montrant le ressort 62 à l'état libre avant son montage dans l'étrier il apparaît que la branche centrale n'est pas parallèle aux branches extrêmes 64 et 66 et détermine avec celles-ci un angle "a". Après montage du ressort 62 dans le dégagement 60 la valeur de l'angle "a" diminue du fait de la sollicitation des branches extrêmes en rapprochement mais ne devient pas nulle comme le montre la Figure 3 en particulier sur les phases d'assemblage du frein. Le bras 22 de l'étrier 14 est équipé de la colonnette 18 dont le boulon 42 est en retrait comme indiqué sur la Figure 1.

On présente ensuite l'étrier 14 pour engager l'échancrure 49 sur bague 52 en prenant soin de réaliser un positionnement correct du manchon 54 comme indiqué sur la Figure 4 et de bien engager le bras 20 entre les collerettes 56 et 58 de la bague 52. On bascule l'étrier 14 suivant la flèche "E" sur le support 10 en le faisant pivoter autour de la colonnette 16, jusqu'à ce que la branche centrale 82 du ressort 62 vienne en contact avec les saillies 96 des élémentes de friction. Un pivotement supplémentaire pour permettre la mise en place par vissage suivant la flèche F du boulon 42 de la colonnette 18 dans le support fixe 10, provoque une déformation élastique du ressort 62 qui assure ainsi une sollicitation élastique sensiblement radiale sur les éléments de friction 32 et 34. La déformation élastique du ressort 62 se repartie en déformations élastiques des brins 88 et 94 et en torsion élastique de la branche centrale 82. La hauteur des saillies 96 et un choix judicieux des dimensions "e" du dégagement 60 et "d" du ressort 62 associés aux déformations élastiques des brins 88 et 94 et de la branche centrale 82 permettent d'obtenir le parallèlisme de ladite branche centrale et desdites branches extrêmes 64 et 66 après assemblage du frein.

Le démontage du frein s'effectue dans l'ordre inverse des opérations qui viennent d'être décrites.

Il apparaît donc, à la lecture de ce qui précède, que le ressort des patins, qui sollicite en appui les éléments de friction sur l'élément les recevant en ancrage est solidaire de l'étrier; ce qui limite le risque d'endommager ou de remonter de façon incorrecte ce ressort.

Il apparaît également que le ressort des patins ne présente qu'une faible surface par rapport à la surface de l'ouverture de l'étrier ce qui permet une bonee aération du frein réduisant ainsi la température de ce dernier.

On comprendra que l'invention n'est pas limitée au frein décrit précédemment et qu'elle peut être avantageusement appliquée à un frein comme, par exemple, celui décri par le brevet Français FR—A—2.138.457.

### Revendications

1. Frein à disque à étrier (14) monté coulissant sur un support fixe (10) comportant deux éléments de friction (32, 34) reçus en ancrage dans ledit support (10) ou ledit étrier (14) et un ressort (62) monté dans un dégagement (60) dudit étrier (14) et sollicitant lesdits éléments de friction (32, 34) en appui sur l'élément les recevant en ancrage caractérisé en ce que ledit ressort (62) comporte deux branches extrêmes (64, 66) sensiblement parallèles à l'axe dudit frein coopérant avec ledit dégagement (60) pour assurer la maintien dudit ressort (62) et une branche centrale (82) reliée auxdites branches extrêmes (64, 66) au moyen de liaisons élastiques (88, 94), pour solliciter élastiquement lesdits éléments de friction (32, 34) dans une direction sensiblement radiale.

2. Frein à disque suivant la revendication 1, caractérisé en ce que lesdites branches extrêmes (64, 66) prennent appui sur deux surfaces d'appui (68, 70) circonférentiellement espacées, formées dans ledit dégagement (60), pour solliciter lesdits éléments de friction (32, 34) au moyen de ladite branche centrale (82) et desdites liaisons élastiques (88, 94).

3. Frein à disque suivant la revendication 2, caractérisé en ce que ladite branche centrale (82) est sensiblement parallèle auxdites branches extrêmes (64, 66) ledit frein étant entièrement assemblé.

4. Frein à disque suivant la revendication 3, caractérisé en ce que ladite branche centrale (82) est extérieure au plan dans lequel s'étendent lesdites branches extrêmes (64, 66).

5. Frein à disque suivant la revendication 4, caractérisé en ce que lesdites liaisons élastiques (88, 94) comprennent un premier brin latéral élastique (88) s'étendant d'une première extrémité (84) de ladite branche centrale (82) à une extrémité (86) d'une desdites branches extrêmes (64) et un second brin latéral élastique (94) s'étendant de la seconde extrémité (90) de ladite branche centrale (82) à une extrémité (92) de l'autre desdites branches extrêmes (66).

6. Frein à disque suivant la revendication 5, caractérisé en ce que ledit ressort (62) est constitué d'un élément unique réalisé dans un matériau élastique.

7. Frein à disque suivant la revendication 6, caractérisé en ce que ledit ressort (62) est réalisé en fil métallique.

8. Frein à disque selon l'une quelconque des revendications 2 à 7, caractérisé en ce que ledit ressort (62) est maintenu dans l'étrier (14) par lesdites liaisons élastiques (88, 94) qui sollicitent continuellement lesdites branches extrêmes (64, 66) en appui sur lesdites surfaces d'appui (68, 70).

### Patentansprüche

1. Scheibenbremse mit einem Schwimmsattel (14), der auf einem festen Bremsträger (10) gleitend gelagert ist, zwei Reibelementen (32, 34), die in dem Bremsträger (10) oder dem Schwimmsattel (14) abgestützt sind, und einer Feder (62), die in einer Ausnehmung (60) des Schwimmsattels (14) angebracht ist und die Reibelemente (32, 34) in Anlage mit dem sie abstützenden Bauteil drückt, dadurch gekennzeichnet, daß die Feder (62) zwei äußere Arme (64, 66) und einen zentralen Arm (82) aufweist, von denen die beiden äußeren Arme im wesentlichen parallel zur Achse der Bremse verlaufen und zur Halterung der Feder (62) mit der Ausnehmung (60) zusammenwirken und von denen der zentrale Arm (82) mit den äußeren Armen (64, 66) über elastische Verbindungsmittel (88, 94) verbunden ist, um die Reibelemente (32, 34) in einer im wesentlichen radialen Richtung elastisch vorzuspannen.

2. Scheibenbremse nach Anspruch 1, dadurch gekennzeichnet, daß die äußeren Arme (64, 66) an zwei in Umfangsrichtung beabstandeten, in der Ausnehmung (60) gebildeten Anlageflächen (78, 70) angreifen, um die Reibelemente (32, 34) mit Hilfe des zentralen Armes (82) und der elastischen Verbindungsmittel (88, 94) vorzuspannen.

3. Scheibenbremse nach Anspruch 2, dadurch gekennzeichnet, daß der zentrale Arm (82) bei vollständig zusammengesetzter Bremse im wesentlichen parallel zu den äußeren Armen (64, 66) verläuft.

4. Scheibenbremse nach Anspruch 3, dadurch gekennzeichnet, daß der zentrale Arm (82) außerhalb der Ebene liegt, in de die äußeren Arme (64, 66) verlaufen.

5. Scheibenbremse nach Anspruch 4, dadurch gekennzeichnet, daß die elastischen Verbindungsmittel (88, 94) aus einem ersten seitlichen elastischen Arm (88) und einem zweiten seitlichen elastischen Arm (94) bestehen, von denen der erste seitliche Arm sich von einem ersten Ende (84) des zentralen Armes (82) bis zu einem Ende (86) eines der äußeren Arme (64) erstreckt und von denen der zweite seitliche Arm sich von dem zweiten Ende (90) des zentralen Arms (82) bis zu einem Ende (92) des anderen äußeren Armes (66) erstreckt.

6. Scheibenbremse nach Anspruch 5, dadurch gekennzeichnet, daß die Feder (62) aus einem einzigen Bauteil besteht, das aus einem elastischen Material hergestellt ist.

7. Scheibenbremse nach Anspruch 6, dadurch gekennzeichnet, daß die Feder (62) aus einem metallischen Draht besteht.

8. Scheibenbremse nach einem der Ansprüche 2—7, dadurch gekennzeichnet, daß die Feder (62) im Schwimmsattel (14) durch die elastischen Verbindungsmittel (88, 94) gehalten ist, die die äußeren Arme (64, 66) kontinuierlich gegen die Anlageflächen (68, 70) drücken.

**Claims**

1. A disc brake of the type having a caliper (14) slidingly mounted upon a fixed support (10), comprising a pair of friction elements (32, 34) received and mounted in said support (10) or said caliper (14), and a spring (62) mounted in a relief (60) of said caliper (14) and biasing said friction elements (32, 34) in engagement with the element receiving and mounting them, characterized in that said spring (62) comprises a pair of end branches (64, 66) substantially parallel to the axis of said brake and cooperating with said relief (60) to retain said spring (62), and a central branch (82) connected to said end branches (64, 66) by means of resilient connection means (88, 94) for resiliently biasing said friction elements (32, 34) in a substantially radial direction.

2. A disc brake according to claim 1 characterized in that said end branches (64, 66) are in abutment with a pair of circumferentially spaced abutment surfaces (68, 70) formed in said relief (60) for biasing said friction elements (32, 34) by means of said central branch (82) and said resilient connection means (88, 94).

3. A disc brake according to claim 2 characterized in that said central branch (82) is substantially parallel to said end branches (64, 66) with said brake being completely assembled.

4. A disc brake according to claim 3 characterized in that said central branch (82) is outside the plane in which said end branches (64, 66) extend.

5. A disc brake according to claim 4 characterized in that said resilient connection means (88, 94) comprise a first lateral resilient branch (88) extending from a first extremity (84) of said central branch (82) to an extremity (86) of one of said end branches (64), and a second lateral resilient branch (94) extending from the second extremity (90) of said central branch (82) to an extremity (92) of the other of said end branches (66).

6. A disc brake according to claim 5 characterized in that said spring (62) consists of a single element made of a resilient material.

7. A disc brake according to claim 6 characterized in that said spring (62) is made of a metallic wire.

8. A disc brake according to any of claims 2 to 7 characterized in that said spring (62) is retained in the caliper (14) by said resilient connection means (88, 94) which continuously bias said end branches (64, 66) in abutment with said abutment surfaces (68, 70).

## FIG_1

## FIG_2

FIG_3

FIG_4

FIG_5

FIG_6